# EUROPEAN PATENT APPLICATION

(11) **EP 4 198 903 A1**
(43) Date of publication of application: **21.06.2023**
(21) Application number: 21215687.1
(22) Date of filing: 17.12.2021
(51) Int. Cl.: G06T 11/00

(54) **PANORAMIC TOMOGRAPHIC IMAGES**

(71) Applicant: DENTSPLY SIRONA Inc., York, 17401-2991 (US); Sirona Dental Systems GmbH, 64625 Bensheim (DE)
(72) Inventor: MAUR, Susanne, 64625 Bensheim (DE); BRAUN, Tim, Groß-Gerau (DE)
(74) Representative: Özer, Alpdeniz

(57) **Abstract**

The present teachings relate to a method for reconstructing a two-dimensional panoramic tomographic image comprising: providing one or more initial panoramic tomographic images; detecting, via an anatomy data-driven logic, one or more pre-selected anatomical features to provide anatomy data; computing, using the anatomy data and one or more initial panoramic tomographic images, a plurality of adjusted reconstruction parameters; reconstructing, using the adjusted reconstruction parameters, the two-dimensional panoramic tomographic image. The present teachings also relate to a system for reconstructing a two-dimensional panoramic tomographic image, and a use of adjusted reconstruction parameters.

## Description

### TECHNICAL FIELD

The present teachings relate generally to computer-implemented methods and systems for medical tomography imaging, more particularly to panoramic imaging.

### BACKGROUND

Panoramic imaging, for example panoramic dental imaging is used for dental diagnosis or treatment of patients. A typical X-ray system used for panoramic dental imaging includes a rotatable arm suspended at one end of a support column and an X-ray generator and an X-ray detector (C-arm) oppositely fixed to respective ends of the rotatable arm. With a patient located between the generator and the detector during a scan, a plurality of X-ray exposures is taken with rotation of the arm such that the movements of the rotatable arm and thus also movements of the X-ray generator and the X-ray detector are synchronized in such a way that an image of an area of desired shape, for example the patient's dental arch, is captured via signal from the detector. The image is usually reconstructed from the plurality of exposures or projection images. The specific parameterization of acquisition and reconstruction processes can cause certain parts of the patient's anatomy to be 'in focus' and sharply depicted in the panoramic image, while other parts of the patient anatomy may be depicted blurred and 'smeared out'. Presence of both effects contribute to the quality of the panoramic image. Usually, a standard parameterization is used which puts the expected region of the dental arch of the patient in focus. The regions which are expected to contain parts of the anatomy that the dentist is not interested in (such as the spine) may be intentionally 'smeared out' in order to reduce their impact on the image.

In some cases, the image may not be focused on the desired area or features of the patient's oral anatomy. As variations can be expected in each individual scan, moreover, to determine a perfect location for the patient prior to the scan can be difficult, it is thus in most cases likely that a panoramic image generated using default reconstruction parameter(s) is not sharply focused on the region of interest. This can make a diagnosis or treatment from the image inaccurate or difficult.

Sometimes, it may be possible to adjust focus of the image by adjusting depth of one or more projection images, for example by adjusting the position of the patient or by selecting a specific scan program/routine which is optimized for specific patient characteristics. This may however require manual work and it may depend upon the skill of the radiologist or practitioner. Certain automatic approaches are also possible, but they may not be optimized.

EP3685752A1 disclosed a method for producing a 2D panoramic image of an oral cavity.

The applicant has realized that there is a need for improved methods and systems which can allow automatic reconstruction of feature relevant panoramic tomographic images with no or reduced relying upon the practitioner handling the scan.

### SUMMARY

At least some of the limitations associated with the foregoing can be overcome by the subject matter of the accompanying independent claims. At least some of the additional advantageous alternatives will be outlined in the dependent claims.

When viewed from a first perspective, there can be provided a computer-implemented method for reconstructing a two-dimensional panoramic tomographic image, which method comprises:
- providing one or more initial panoramic tomographic images; each of the initial panoramic tomographic image being reconstructed from a plurality of projectional images that have been captured via a tomographic scan; wherein each of the initial panoramic tomographic images is reconstructed using respective an initial set of reconstruction parameters,
- detecting, via an anatomy data-driven logic, one or more pre-selected anatomical features in at least one of the initial panoramic tomographic images to provide anatomy data,
- computing, using the anatomy data and one or more initial panoramic tomographic images, a plurality of adjusted reconstruction parameters, whereby the adjusted reconstruction parameters are computed for providing appropriate focus depths which provide a sharper depiction of the pre-selected anatomical features,
- reconstructing, using the adjusted reconstruction parameters, the two-dimensional panoramic tomographic image.

The applicant has found out by inventive effort that by doing so the two-dimensional panoramic tomographic image can be generated automatically by focusing on one or more of the anatomical features of interest. The present teachings thus enable automatically adapting the sharp layer in the two-dimensional panoramic tomographic image by optimally determining the adjusted reconstruction parameters which are used for reconstructing said image. Sharp layer in this context refers to the image plane which is sharply imaged in the corresponding panoramic tomographic image. More specifically, the present teachings enable adapting the depth of the sharp layer for multiple regions, and preferably each region, of the reconstructed image such that a sharper panoramic tomographic image of the one or more anatomical features of interest can be obtained. Moreover, fewer pre-calculations may be needed compared to classical autofocus methods, thereby a possible speedup for calculation may be achieved.

More specifically, one or more of the initial panoramic tomographic images are considered as a reference and based on the anatomy data provided by the anatomy data-driven logic, the adjusted reconstruction parameters are computed. The initial panoramic tomographic image(s) are thus used as a reference to locate anatomical features and/or to determine the depth of anatomical features.

An advantage of doing so is that appearance and focus of the two-dimensional panoramic tomographic image can be automatically based on clinical value (anatomical or pathologi cal).

The present teachings are found to be particularly advantageous for digital tomosynthesis scans or panoramic scanning ("PAN"), and thus applications in digital tomosynthesis systems, especially those used for scanning dental features or oral cavity.

"Two-dimensional panoramic tomographic image" refers to a panoramic image which is generated by using the adjusted reconstruction parameters.

The way in which the projectional images are combined to generate a panoramic tomographic image has a bearing on the sharpness or focus of the panoramic image. For example, if the projectional images are reconstructed by shifting consecutive projectional images by "x" pixels, the resulting panoramic image will have a given focus or depth. Alternatively, it can be said that the sharp layer of the panoramic image will have a sharp layer at a given depth and given width which is dependent upon the reconstruction parameters. Said focus can be altered by altering the reconstruction parameters.

The present teachings allow automatic computation of adjusted reconstruction parameters which are calculated to enable the pre-selected anatomical features to be in the sharp layer of the two-dimensional panoramic tomographic image.

"Projectional image" in the present context refers to an image which is acquired from a specific location of the X-ray source and detector with respect to the anatomy of the patient. Typically, a projectional image refers to a single exposure recorded via the X-ray detector at a given position and at a specific time. Projectional images belonging to the same scan, or each of the images in the plurality of projectional images, are typically captured in a series fashion. Thus, projectional images of the sections of the patient's anatomy are acquired individually at the X-ray detector in an image-by-image manner. A panoramic tomographic image can thus be reconstructed from the projectional images acquired by the scan.

"Reconstruction parameters" in general refers to parameters or values which are usable for reconstructing panoramic tomographic image from the plurality of projectional images.

"Initial set of reconstruction parameters" refers to a set of default or arbitrary parameters which are usable for reconstructing a panoramic tomographic image. For example, the default reconstruction parameters may be parameters which correspond to default settings which are dependent, for example, upon equipment such as the machine being used for capturing the projectional images and/or the used scan routine/program. Additionally, or alternatively, they may be average values of the corresponding parameters with which sharp or acceptable panoramic tomographic images have been produced. Additionally, or alternatively, they may correspond to those parameter values which have had most success rate in producing acceptable panoramic tomographic images.

"Initial panoramic tomographic image" refers to a panoramic image which has been reconstructed using the initial set of reconstruction parameters. In the initial panoramic tomographic image, the pre-selected anatomical features may not be in the sharp layer. It shall be appreciated that the initial panoramic tomographic image may or may not be in a canonical view.

"Anatomy data-driven logic" may refer to a data-driven logic which is trained or pretrained in a supervised manner using anatomy training data comprising historical initial panoramic tomographic images and/or historical panoramic tomographic images with annotation data specifying respective anatomical features. Alternatively, or additionally, the anatomy data-driven logic may be trained in an unsupervised manner.

The anatomy data-driven logic may be provided with at least one of the initial panoramic tomographic images as input. The anatomy data-driven logic provides the anatomy data as an output.

According to an aspect, the anatomy data-driven logic performs segmentation operation for detecting the one or more pre-selected anatomical features. Alternatively, or additionally, the anatomy data-driven logic performs detection and/or localization operations for detecting the one or more pre-selected anatomical features.

Thus, in general, the anatomy data-driven logic extracts features of interest, or the pre-selected anatomical features, from one or more of the initial panoramic tomographic images.

"Data-driven logic" refers to a logic, which at least partially derives its functionality from training data. This can reduce computational power and/or improve speed as compared to analytical techniques or hand-written algorithms. Moreover, data-driven logic may be able to detect patterns or indications (e.g., in input or input data) which can otherwise not be known or may be difficult to implement as an analytical logic form.

The data-driven logic may be in software and/or hardware form, for example, executable via one or more computing units.

It shall be appreciated that in the present context, the data-driven logic refers to a trained mathematical logic which is parametrized according to the respective training data set. For example, the anatomy data-driven logic is parameterized via its respective training data to detect one or more anatomical features. An untrained mathematical logic is not capable of doing so. Feature engineering and training with the respective training datasets enable parametrization of the untrained mathematical logic.

The data-driven logic preferably comprises, or it is a regression logic. In some cases, the data-driven logic may be combined with or it may further include an analytical logic. The analytical logic may describe the relation between its input and output by a function or one or more mathematical equations or logical criteria. Thus, any of the data-driven logics may even be a hybrid logic. A hybrid logic refers to a logic which comprises first-principles parts, so called white-box described via a set of instructions, e.g., programmer written code, as well as data-driven parts as explained previously. The data-driven part may also be called black-box logic or model. Hence, the data-driven logic may be a combination of white-box logic or analytical logic and black-box logic. In some cases, the data-driven logic may be, or it may even have, a grey-box part. A grey-box logic in this context refers to a logic or model which combines a partial theoretical structure with training data to complete the model.

"Anatomical feature" refers to information related to a specific oral anatomy of the patient. For example, an anatomical feature may be information related to a specific tooth or a group of teeth. Thus, anatomical features may even refer to information related to any one or more intraoral structures such as, dentition, gingiva, nerve channels, extraction sites, jaw bones, or extraoral structures as condyles, nasal antrum, sinuses, and bones. Alternatively, or in addition, anatomical features may be one or more artificial structures such as one or more dental replacements, e.g., dental crowns, braces, veneers, bridges. Alternatively, or in addition, an anatomical feature may in some cases even be a scan body (or scanbody) or other natural and/or artificial structure attached to the jaw of the patient. Alternatively, or additionally, the anatomical feature may even be information related to a pathology or condition. As non-limiting examples, pathology or condition may be any one or more of, fracture of tooth or bone, bone loss, caries, radiolucency, demineralization, infection, impaction, cyst, cancer or any other characterizable state of the oral anatomy or any part thereof.

In some cases, one or more pre-selected anatomical features may be specified via a user input. For example, the health practitioner or technician may specify via a user input that tooth tips need to be in a sharp view. The present teachings can enable automatic generation of the two-dimensional panoramic tomographic image where the pre-selected anatomical features, or as in this example, the tips of the teeth are in a sharp view or focus.

According to an aspect, any one or more of the pre-selected anatomical features may be specified via a user input. For example, a dental practitioner or technician may provide as an input that the two-dimensional panoramic tomographic image should focus on the nerve channels. The input may thus be used as a pre-selected anatomical feature for keeping the nerve channels in the sharp layer of the two-dimensional panoramic tomographic image. Alternatively, or additionally, one or more of the pre-selected anatomical features may be specified automatically, for example, by detecting the type of tomographic scan and/or the anatomical features which are detected in the initial panoramic tomographic image and/or by analyzing one or more historical panoramic tomographic images of the same patient, e.g., when doing a follow-up scan. An advantage of doing so is that tomographic image can be automatically generated for specific tasks, e.g., to visualize root tips or nerve channels.

"Anatomy data" refer to an output of the anatomy data-driven logic. Anatomy data may comprise one or more anatomical features or information related to thereof. As a few non-limiting examples, the anatomy data may comprise any one or more of, a standardized tooth number of a tooth of the patient, shape information of one or more teeth, location of a tooth's pulpal chamber, location of a tooth tip, or any other anatomical information derivable from the initial panoramic tomographic image(s). The tooth number may be based on dental notation, such as ISO 3950, Palmer notation, universal numbering system, their likes, and/or their combination. Similarly, alternatively, or additionally, the anatomy data may comprise information related to jaw section and/or other parts of the oral anatomy or its surroundings, e.g., any one or more of, mandible, maxilla, gingiva, tooth root, nasal antrum, sinuses, condyles, etc.

The anatomy data-driven logic may comprise, or it may be in the form of, an artificial neural network ("ANN"). The ANN may comprise a plurality of processing layers. For example, the anatomy data-driven logic may comprise, or it may be in the form of, a convolutional neural network ("CNN") comprising a plurality of processing layers arranged in serial and/or parallel fashion.

"Adjusted reconstruction parameters" refers to recalculated values of reconstruction parameters, which are used to produce the two-dimensional panoramic tomographic image. Any of the adjusted reconstruction parameters may be values which are respectively applied to their corresponding initial reconstruction parameters. Alternatively, or additionally, any of the adjusted reconstruction parameters may be used directly as respective reconstruction parameter for reconstructing the two-dimensional panoramic tomographic image.

The adjusted reconstruction parameters are such that they result in reconstruction which adapts the sharp layer to the pre-selected one or more anatomical features.

According to an aspect, the anatomy data-driven logic performs segmentation operation for detecting any one or more of the pre-selected anatomical features. Alternatively, or additionally, the anatomy data-driven logic performs localization operation for detecting any one or more of the pre-selected anatomical features.

"Segmentation operation" in the present context refers to a computerized processing operation which concludes with demarcation of at least one anatomical feature with a computer-generated feature boundary or feature mask.

The anatomy data-driven logic may perform a segmentation operation for detecting the one or more pre-selected anatomical features. Thus, the anatomy data-driven logic may segment at least one of the initial panoramic tomographic images for detection. Thus, the anatomy data-driven logic may extract attributes or one or more objects of interest from at least one of the initial panoramic tomographic images. The anatomy data-driven logic may classify some or every pixel in the respective initial panoramic tomographic image into a class according to its context such that each classified pixel is assigned to a specific object type or even specific object instance. A non-limiting example of a segmentation operation when applied using the present teachings may be an outline around a pre-selected anatomical feature, such as a specific tooth or even a group of teeth. Another non-limiting example is an outline around a specific pathology. Said segmented outline corresponds to the shape of the respective anatomical feature as visible in the respective initial panoramic tomographic image.

There may be a plurality of segmented objects in the initial panoramic tomographic image.

In addition to the data-driven approach, the segmentation operation may be supplemented by an analytical model using any suitable segmentation algorithm, e.g., point and line detection, edge linking, and/or thresholding method, histogram, adaptive, and their likes.

A "localization" operation in the present context refers to a computerized processing operation which concludes with a more general region or location within which a specific anatomical feature is located in an initial panoramic tomographic image. The localization may also result in a boundary within with said anatomical feature is located, however, unlike a segmentation operation, a pixel-by-pixel evaluation is not performed. Hence, a localization boundary, if generated, may be broader than a segmented boundary around a given anatomical feature. Additionally, or alternatively, a localization operation may conclude with annotating or tagging a specific anatomical feature, for example in any location on said anatomical feature.

Similarly, in addition to the data-driven approach, the localization operation may be supplemented by an analytical model using any suitable localization algorithm, e.g., edge and shape detection, and their likes.

According to an aspect, the anatomy data-driven logic is trained in a supervised manner using anatomy training data comprising historical tomographic images and their corresponding annotation data specifying respective anatomical features which are visible in the corresponding image. The historical tomographic images may be historical initial panoramic tomographic images and/or historical two-dimensional panoramic tomographic images.

According to an aspect, the computation of the plurality of adjusted reconstruction parameters is performed via a first reconstruction data-driven logic.

"First reconstruction data-driven logic" refers to a data-driven logic which is used for computing at least some of the adjusted reconstruction parameters or applying further adjustments to those. More specifically, the first reconstruction data-driven logic provides the adjusted reconstruction parameters such that a sharper depiction of the pre-selected anatomical features is achieved in the two-dimensional panoramic tomographic image reconstructed using the adjusted reconstruction parameters.

The first reconstruction data-driven logic may be arranged in a serial manner to the anatomy data-driven logic, whereby output of the anatomy data-driven logic is provided directly or indirectly as an input to the first reconstruction data-driven logic.

According to an aspect, the first reconstruction data-driven logic is trained in a supervised manner using first reconstruction training data comprising historical tomographic images provided with annotation data including associated reconstruction parameters.

The first reconstruction training data may comprise one or more historical two-dimensional panoramic tomographic images. In the first reconstruction training data, each of the historical two-dimensional panoramic tomographic images is provided with its corresponding adjusted reconstruction parameters. Additionally, according to an aspect, the first reconstruction training data may even comprise as historical tomographic images, one or more initial panoramic tomographic images, and the corresponding initial set of reconstruction parameters. This can enrich the first reconstruction training data and allow finer computation of the adjusted reconstruction parameters via the first reconstruction data-driven logic. In some cases, the first reconstruction training data may even include contextual data associated with one or more historical tomographic images specifying the anatomical features which are present in the sharp layer in the respective image. This can further improve the computation of the adjusted reconstruction parameters by associating the adjusted reconstruction parameters with the corresponding anatomical features. The contextual data may be at least partially derived from the anatomy data and/or it may comprise annotation data added via user input.

The applicant has further realized that the tomographic scans can be sensitive to patient placement during capturing of the projectional images. Different tomographic scans which are performed at different times can sometimes be difficult to compare because the position of the patient may not be identical with respect to the X-ray source-detector arrangement in different scans. For example, between different scans, the patient's head may have different tilt or shift in one or more directions. This can cause patient pose-related distortion in a resulting tomographic image. The image distortion corresponds approximately to the effect of a change of patient positioning during scanning. More particularly the poses apparent in different panoramic tomographic images may be non-identical. To minimize the patient pose-related distortion, traditionally careful alignment of the patient with respect to the source-detector arrangement is performed. This can take time and thus cause discomfort to the patient. In some cases, the scan may need to be repeated, which is not desirable either.

The applicant has found a solution to generate panoramic tomographic images which have a canonical view.

According to an aspect, method comprises:
- computing, using the anatomy data, at least some of the plurality of adjusted reconstruction parameters, whereby the adjusted reconstruction parameters are computed also for aligning one or more of the initial panoramic tomographic images and/or the two-dimensional panoramic tomographic image with respect to a reference template. This way, certain kinds of pose-related distortion can be at least partially corrected for.

Those skilled in the art shall appreciate that the above features are also inventive in their own right, thus when viewed from another perspective, there can be provided a computer-implemented method for reconstructing a two-dimensional panoramic tomographic image, which method comprises:
- providing one or more initial panoramic tomographic image; each of the initial panoramic tomographic image being reconstructed from a plurality of projectional images that have been captured via a tomographic scan; wherein each of the initial panoramic tomographic image is reconstructed using respective an initial set of reconstruction parameters,
- detecting, via an anatomy data-driven logic, one or more pre-selected anatomical features in at least one of the initial panoramic tomographic images to provide anatomy data,
- computing, using the anatomy data, at least some of the plurality of adjusted reconstruction parameters, whereby the adjusted reconstruction parameters are computed for aligning one or more of the initial panoramic tomographic images and/or the two-dimensional panoramic tomographic image with respect to a reference template,
- reconstructing, using the adjusted reconstruction parameters, the two-dimensional panoramic tomographic image.

The applicant has found it particularly advantageous to reduce or eliminate patient pose-related distortion or artifacts by applying such adjusted reconstruction parameters. The resulting two-dimensional panoramic tomographic image can be more comparable to previously generated images using a similar approach. This can also improve the historical two-dimensional panoramic tomographic images for use as a training dataset, for example, the first reconstruction training data. Generating the two-dimensional panoramic tomographic image in a canonical representation thus supports follow-up scans and the comparison of scans by reducing image variations due to different patient positioning.

Another synergistic advantage of the two-dimensional panoramic tomographic image as herein adjusted for sharpness and canonical view is that appearance and focus can be corrected essentially simultaneously. Thus, by combining sharpness/focus optimization and canonical representation can lead to benefits in quality and calculation time.

"Reference template" in this context refers to a representation indicative of location of pre-selected anatomical features, for example with respect to each another. In some cases, the representation can be pictorial, in some cases it can be textual / symbolic. The pre-selected anatomical features may for example be the dental arch, such that the reference template in this case can be a pictorial representation of the outlines of the teeth along the dental arch. Additionally, in some cases other anatomical features such as nasal cavity, condyles, or any combination of different anatomical features can also be represented in the reference template. The reference template may even refer to positions and/or dimensions of the pre-selected anatomical features with respect to each another, in absolute and/or relative term. For example, position of the dental arch or parts thereof with respect to other anatomical features and/or position of the parts of the dental arch with respect to each another. In some cases, the reference template may either be a tomographic panoramic image comprising a canonical view, or the reference template may be constructed using parts of, or data from, one or more tomographic images.

The alignment of the initial panoramic tomographic image and/or the two-dimensional panoramic tomographic image may be done, for example, by representing the projection surface during reconstruction as a non-uniform mesh in space and adjusting the sampling distance between the vertices to adapt the sharp layer to the reference template. The adjusted reconstruction parameters may be computed from the vertices of the adjusted mesh.

For example, the reconstruction parameters can be represented as a curved surface in a three-dimensional ("3D") space. Possible representations include: mesh, point cloud, point cloud with interpolation, thin-plate spline or depth map.

Similarly, the method for alignment can be combined with adjusting the reconstruction parameters for sharper depiction. Thus, the method may also comprise:
- computing, using the anatomy data and one or more initial panoramic tomographic image, a plurality of adjusted reconstruction parameters, whereby the adjusted reconstruction parameters are computed also for providing appropriate focus depths which provide a sharper depiction of the pre-selected anatomical features.

According to an aspect, for alignment, the computation of the at least some of the plurality of adjusted reconstruction parameters is performed via a second reconstruction data-driven logic.

"Second reconstruction data-driven logic" refers to a data-driven logic which is used for computing at least some of the adjusted reconstruction parameters or applying further adjustments to those. More specifically, the second reconstruction data-driven logic provides the adjusted reconstruction parameters such that the resulting two-dimensional panoramic tomographic image, reconstructed using the adjusted reconstruction parameters, is aligned, for example, with respect to a reference template.

The second reconstruction data-driven logic may be arranged in a serial manner to the anatomy data-driven logic and/or the first reconstruction data-driven logic, whereby output of any of these is provided directly or indirectly as an input to the second reconstruction data-driven logic. The serial arrangement may be in any suitable order. For example, in some cases, the second reconstruction data-driven logic may be arranged upstream of the first reconstruction data-driven logic.

According to an aspect, the second reconstruction data-driven logic is trained in a supervised manner using second reconstruction training data comprising historical anatomy data provided with annotation data including associated reconstruction parameters. The reconstruction parameters associated with the respective anatomy data and those which provided a canonical view or alignment with respect to the reference template/view. The second reconstruction data-driven logic may, for example, adapt one or more non-uniform sampling distances which result in a distortion of the initial reconstructed image(s). The adjusted reconstruction parameters may be computed such by the second reconstruction data-driven logic that any of the said one or more non-uniform sampling distances are corrected in the resulting two-dimensional panoramic tomographic image reconstructed by using the adjusted reconstruction parameters.

According to an aspect, any two or more of the data-driven logics, i.e., the anatomy data-driven logic, the first reconstruction data-driven logic, and the second reconstruction data-driven logic are parts of a combined logic. Thus, any two or more of these may be in the form of the same module or logic.

"Combined logic" refers to a logic comprising at least one of the two different data-driven logics disclosed herein. The combined logic may be pretrained in a supervised manner using end-to-end training process. The end-to-end training process in this context refers to at least partially annotated data comprising inputs and corresponding outputs. In some cases, the combined logic may be trained fully or partially in an unsupervised manner.

Thus, according to an aspect, the combined logic may be pretrained in a supervised manner using combined training data comprising historical initial tomographic images and/or historical panoramic tomographic images with annotation data specifying associated reconstruction parameters, and optionally, respective anatomical features.

Those skilled in the art shall appreciate that in the present disclosure, the computed adjusted reconstruction parameters may be adjustment values applied to the initial set of reconstruction parameters, or they may be values which replace the initial set of reconstruction parameters partially or fully.

Those skilled in the art shall also appreciate that the two-dimensional panoramic tomographic image may be reconstructed from some or all projectional images from the plurality of projectional images.

According to another perspective, there can also be provided a use of the adjusted reconstruction parameters as generated herein for constructing a two-dimensional panoramic tomographic image. There can also be provided a use of the adjusted reconstruction parameters as generated herein for training a data-driven logic. There can also be provided a computer-readable data medium or carrier which includes any suitable data storage device storing the reconstruction parameters, more particularly the adjusted reconstruction parameters, as generated herein. There can also be provided a method for reconstructing a two-dimensional panoramic tomographic image wherein the method comprises:
- providing a plurality of projectional images;
- reconstructing, using the adjusted reconstruction parameters, the two-dimensional panoramic tomographic image, and/or training a data-driven logic.

When viewed from yet another perspective, there can also be provided a system comprising means for performing any of the herein disclosed method steps. Or there can be provided a system, wherein the system is configured to perform any of the herein disclosed method steps.

Any of the systems herein disclosed may comprise, and/or be operatively connected to, one or more computing units. Optionally, any of the systems and/or any of the computing units may be configured to operatively connect to a network, e.g., via one or more network interfaces and/or connectivity interfaces. According to an aspect, any one or more of the computing units and/or network interfaces may be part of the tomography apparatus which is used for capturing the projectional images. Any of the systems herein disclosed may be comprised in a tomography apparatus or they may be in the form of a tomography apparatus, more particularly a CBCT apparatus or system.

For example, there can be provided a system for generating a two-dimensional panoramic tomographic image, the system comprising, and/or being operatively connected to, one or more computing units, wherein the system is configured such that any of one or more of the computing units are configured to:
- provide one or more initial panoramic tomographic image; each of the initial panoramic tomographic image being reconstructed from a plurality of projectional images that have been captured via a tomographic scan; wherein each of the initial panoramic tomographic image is reconstructed using respective an initial set of reconstruction parameters,
- detect, via an anatomy data-driven logic, one or more pre-selected anatomical features in at least one of the initial panoramic tomographic images to provide anatomy data,
- compute, using the anatomy data and one or more initial panoramic tomographic image, a plurality of adjusted reconstruction parameters, whereby the adjusted reconstruction parameters are computed for providing appropriate focus depths which provide a sharper depiction of the pre-selected anatomical features,
- reconstruct, using the adjusted reconstruction parameters, the two-dimensional panoramic tomographic image.

Similarly, there can be provided a system for generating a two-dimensional panoramic tomographic image comprising one or more computing units, wherein the system is configured such that any of one or more of the computing units are configured to:
- provide one or more initial panoramic tomographic image; each of the initial panoramic tomographic image being reconstructed from a plurality of projectional images that have been captured via a tomographic scan; wherein each of the initial panoramic tomographic image is reconstructed using respective an initial set of reconstruction parameters,
- detect, via an anatomy data-driven logic, one or more pre-selected anatomical features in at least one of the initial panoramic tomographic images to provide anatomy data,
- compute, using the anatomy data, at least some of the plurality of adjusted reconstruction parameters, whereby the adjusted reconstruction parameters are computed for aligning one or more of the initial panoramic tomographic images and/or the two-dimensional panoramic tomographic image with respect to a reference template,
- reconstruct, using the adjusted reconstruction parameters, the two-dimensional panoramic tomographic image.

When viewed from another perspective, there can also be provided a computer software product, or a non-transitory computer-readable storage medium storing the program, comprising instructions which when executed by a suitable computing unit, or a system comprising, and/or operatively connected to, one or more computing units, cause any of the computing units to perform any of the herein disclosed method steps.

For example, there can be provided a computer software product, or a non-transitory computer-readable storage medium storing the program, comprising instructions which when executed by a suitable computing unit, or a system comprising, and/or operatively connected to, one or more computing units, cause any of the computing units to:
- provide one or more initial panoramic tomographic image; each of the initial panoramic tomographic image being reconstructed from a plurality of projectional images that have been captured via a tomographic scan; wherein each of the initial panoramic tomographic image is reconstructed using respective an initial set of reconstruction parameters,
- detect, via an anatomy data-driven logic, one or more pre-selected anatomical features in at least one of the initial panoramic tomographic images to provide anatomy data,
- compute, using the anatomy data and one or more initial panoramic tomographic image, a plurality of adjusted reconstruction parameters, whereby the adjusted reconstruction parameters are computed for providing appropriate focus depths which provide a sharper depiction of the pre-selected anatomical features,
- reconstruct, using the adjusted reconstruction parameters, the two-dimensional panoramic tomographic image.

Similarly, there can be provided a computer software product, or a non-transitory computer-readable storage medium storing the program, comprising instructions which when executed by a suitable computing unit, or a system comprising, and/or operatively connected to, one or more computing units, cause any of the computing units to:
- provide one or more initial panoramic tomographic image; each of the initial panoramic tomographic image being reconstructed from a plurality of projectional images that have been captured via a tomographic scan; wherein each of the initial panoramic tomographic image is reconstructed using respective an initial set of reconstruction parameters,
- detect, via an anatomy data-driven logic, one or more pre-selected anatomical features in at least one of the initial panoramic tomographic images to provide anatomy data,
- compute, using the anatomy data, at least some of the plurality of adjusted reconstruction parameters, whereby the adjusted reconstruction parameters are computed for aligning one or more of the initial panoramic tomographic images and/or the two-dimensional panoramic tomographic image with respect to a reference template,
- reconstruct, using the adjusted reconstruction parameters, the two-dimensional panoramic tomographic image.

A computer-readable data medium or carrier includes any suitable data storage device on which one or more sets of instructions (or software) are stored for implementing any one or more methodologies disclosed herein. The instructions may even reside partially, or completely, within the main memory and/or within the processor during execution thereof by the computing unit, and main memory, which may constitute computer-readable storage media. The instructions may even be transmitted or received over a network via a network device.

The computer program for implementing any one or more of the embodiments described herein may be stored and/or distributed on a suitable medium, such as an optical storage medium or a solid-state medium supplied together with or as a part of another hardware, but may also be distributed in other forms, such as via the Internet or other wired or wireless telecommunication systems. However, the computer program may also be presented over a network like the World Wide Web and can be downloaded into the working memory of a data processor from such a network.

Furthermore, data carrier or a data storage medium for making a computer program product available for downloading can also be provided, which computer program product is arranged to perform a method according to any of the methods herein disclosed.

When viewed from another perspective, there can also be provided a computing unit comprising the computer program code for performing the method herein disclosed. Also, there can be provided a computing unit operatively coupled to a memory storage comprising the computer program code for carrying out any of the methods herein disclosed.

"Computing unit", "computing device", "processing unit" or "processing device" may comprise, or it may be, a processing means or computer processor such as a microprocessor, microcontroller, or the likes, having one or more computer processing cores.

"Computer processor" refers to an arbitrary logic circuitry configured for performing basic operations of a computer or system, and/or, generally, to a device which is configured for performing calculations or logic operations. In particular, the processing means or computer processor may be configured for processing basic instructions that drive the computer or system. As an example, the processing means or computer processor may comprise at least one arithmetic logic unit ("ALU"), at least one floating point unit ("FPU"), such as a math coprocessor or a numeric coprocessor, a plurality of registers, specifically registers configured for supplying operands to the ALU and storing results of operations, and a memory, such as an L1 and L2 cache memory. In particular, the processing means or computer processor may be a multi core processor. Specifically, the processing means or computer processor may be or may comprise a central processing unit ("CPU"). the processing means or computer processor may be a complex instruction set computing ("CISC") microprocessor, reduced instruction set computing microprocessor ("RISC"), very long instruction word ("VLIW") microprocessor, a processor implementing other instruction sets or processors implementing a combination of instruction sets. The processing means may also be one or more special purpose processing devices such as an application specific integrated circuit ("ASIC"), a field programmable gate array ("FPGA"), a complex programmable logic device ("CPLD"), a digital signal processor ("DSP"), a network processor, or the like. The methods, systems and devices disclosed herein may be implemented as software in a DSP, in a microcontroller, or in any other side processor such as hardware unit within an ASIC, CPLD, or FPGA. It is to be understood that the term processing means or processor may also refer to one or more processing devices, such as a distributed system of processing devices located across multiple computer systems (such as cloud computing), and is not limited to a single device unless otherwise specified.

"Memory storage" may refer to a device for storage of information, in the form of data, in a suitable storage medium. Preferably, the memory storage is a digital storage suitable for storing the information in a digital form which is machine readable, for example digital data that are readable via a computer processor. The memory storage may thus be realized as a digital memory storage device that is readable by a computer processor. Further preferably, the memory storage on the digital memory storage device may also be manipulated by a computer processor. For example, any part of the data recorded on the digital memory storage device may be written and or erased and or overwritten, partially or wholly, with the new data by the computer processor.

"Network" discussed herein may be any suitable kind of data transmission medium, wired, wireless, or their combination. A specific kind of network is not limiting to the scope or generality of the present teachings. The network can hence refer to any suitable arbitrary interconnection between at least one communication end point to another communication end point. Network may comprise one or more distribution points, routers or other types of communication hardware. The interconnection of the network may be formed by means of physically hard wiring, optical and/or wireless radio frequency ("RF") methods. The network specifically may be, or it may comprise, a physical network fully or partially made by hard wiring, such as a fiber optical network or a network fully or partially made by electrically conductive cables or a combination thereof. The network may at least partially comprise the Internet.

"Network interface" refers to a device or a group of one or more hardware and/or software components that allow an operative connection with the network.

That two or more components are "operatively" coupled or connected shall be clear to those skilled in the art. In a non-limiting manner, this means that there may be at least one communicative connection between the coupled or connected components e.g., they are the network interface or any suitable interface. The communicative connection may either be fixed, or it may be removable. Moreover, the communicative connection may either be unidirectional, or it may be bidirectional. Furthermore, the communicative connection may be wired and/or wireless. In some cases, the communicative connection may also be used for providing control signals.

"Connectivity interface" or "communication interface" refers to a software and/or hardware interface for establishing communication such as transfer or exchange of signals or data. The communication may either be wired, or it may be wireless. Connectivity interface is preferably based on or it supports one or more communication protocols. The communication protocol may be a wireless protocol, for example: short distance communication protocol such as Bluetooth^{®}, or Wi-Fi, or long communication protocols such as cellular or mobile network, for example, second generation cellular network ("2G"), 3G, 4G, long term evolution ("LTE"), or 5G. Alternatively, or in addition, the connectivity interface may even be based on proprietary short-distance or long-distance protocol. The connectivity interface may support any one or more standards and/or proprietary protocols.

### BRIEF DESCRIPTION OF THE SEVERAL VIEWS OF THE DRAWINGS

Certain aspects of the present teachings will now be discussed with reference to the accompanying drawings that explain said aspects by the way of examples. Since the generality of the present teachings is not dependent on it, the drawings may not be to scale. Method and system aspects may be discussed in conjunction for ease of understanding. Certain features shown in the drawings may be logical features that are shown together with physical features for the sake of understanding and without affecting the generality or scope of the present teachings.
FIG. 1 illustrates a flowchart of an aspect of the present teachings;
FIG. 2 illustrates a visualization of an example output data or annotation data for the anatomy data-driven logic;
FIG. 3A - 3D illustrate patient position dependence of panoramic tomographic images;
FIG. 4 illustrates a flowchart of another aspect of the present teachings.

### DETAILED DESCRIPTION

In accordance with example aspects described herein, methods, systems and computer readable storage media can be provided, e.g., for producing or reconstructing a two-dimensional panoramic tomographic image.

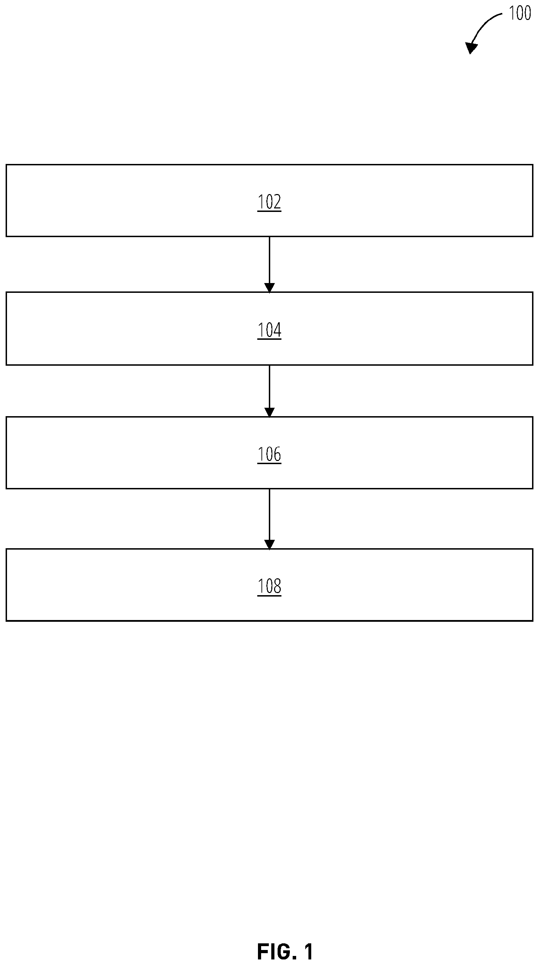

FIG. 1 shows a flowchart 100 exemplifying an aspect of the present teachings. The flowchart 100 can be implemented as a routine executable by one or more computing units, for example, operatively connected to a tomography apparatus, for example, a CBCT system for dental applications.

In block 102, it is provided one or more initial panoramic tomographic images. The initial panoramic tomographic images may be provided via one or more interfaces, which may be a connectivity interface and/or a network interface. The initial panoramic tomographic images may even be provided directly via a tomography system to any one or more of the computing units. Each of the initial panoramic tomographic images is reconstructed from a plurality of projectional images that have been captured via a tomographic scan. The tomographic scan may have been performed via the tomography system. Each of the initial panoramic tomographic images is reconstructed using an initial set of reconstruction parameters for that respective image, which may be identical or non-identical to those for the other initial panoramic tomographic images. As it shall be appreciated, in some cases, there may be just one initial panoramic tomographic image.

In block 104, it is detected, via an anatomy data-driven logic, one or more pre-selected anatomical features in at least one of the initial panoramic tomographic images to provide anatomy data.

In block 106, it is computed, using the anatomy data and one or more initial panoramic tomographic images, a plurality of adjusted reconstruction parameters. The adjusted reconstruction parameters are computed for providing appropriate focus depths which provide a sharper depiction of the pre-selected anatomical features, e.g., as compared to the depiction of said features in any one or more of the initial panoramic tomographic images. The computation is preferably advantageously performed via a first reconstruction data-driven logic as herein disclosed. Further advantageously, the anatomy data-driven logic, and the first reconstruction data-driven logic are included in a combined logic. In some cases, the first reconstruction data-driven logic may even be combined with the second reconstruction data-driven logic as herein disclosed to realize the combined logic. Alternatively, the anatomy data-driven logic and the second reconstruction data-driven logic may be the combined logic, or the combined logic may include all three.

In block 108, a two-dimensional panoramic tomographic image is reconstructed using the adjusted reconstruction parameters. The two-dimensional panoramic tomographic image thus provides the pre-selected anatomical features in its sharp layer.

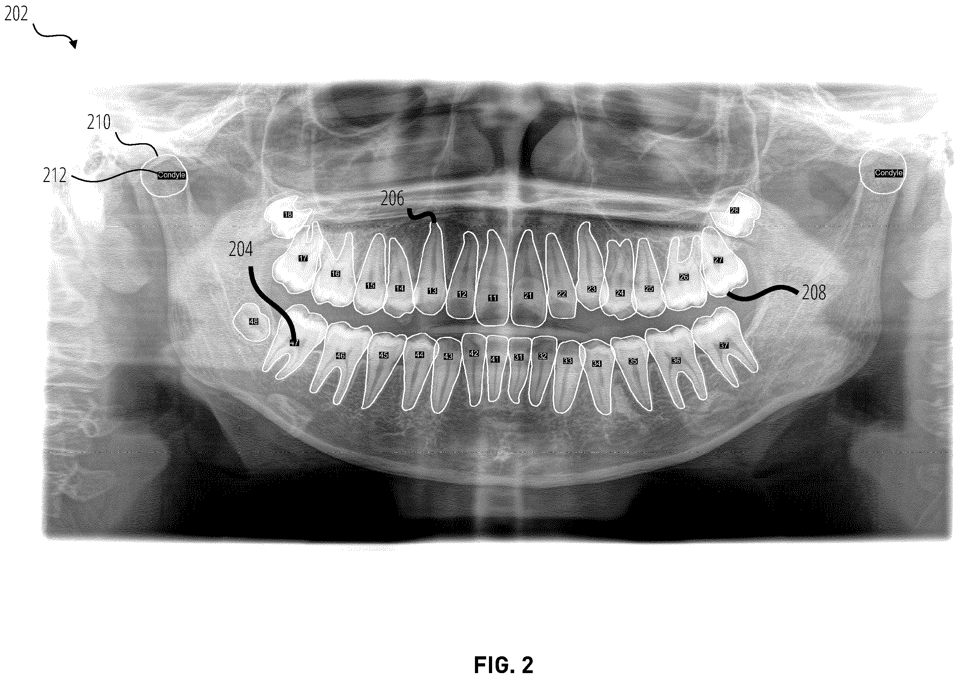

FIG. 2 shows an example of a panoramic tomographic image 202 which is a visualization of an example output data or annotation data for the anatomy data-driven logic. The image 202 pertains to a dental region or oral cavity of a patient.

The panoramic tomographic image 202 exemplifies an output of the anatomy data-driven logic, more specifically when an initial panoramic tomographic image has been processed via the anatomy data-driven logic. The panoramic tomographic image thus shows anatomy data overlaid to the initial panoramic tomographic image. It can be seen in the panoramic tomographic image 202, a plurality of outlines or boundaries around different teeth as well as other anatomical features, for example, condyles. Such boundaries or outlines are a result of one or more segmentation operations performed via the anatomy data-driven logic. For example, a condyle boundary 210 is shown. It is also shown localization operation, for example, a condyle localization 212 is shown as a dot or a point in the area where the respective condyle was detected by the anatomy data-driven logic. Similarly, other boundaries are visible, for example boundary 206 and boundary 208 for the respective teeth which are localized as well in the panoramic tomographic image. Another localization which is visible is denoted by a tag 204 associated with the respective tooth.

Hence, the anatomy data, and preferably also the associated initial panoramic tomographic image, are used subsequently to compute a plurality of adjusted reconstruction parameters. The two-dimensional panoramic tomographic image is then reconstructed using the adjusted reconstruction parameters.

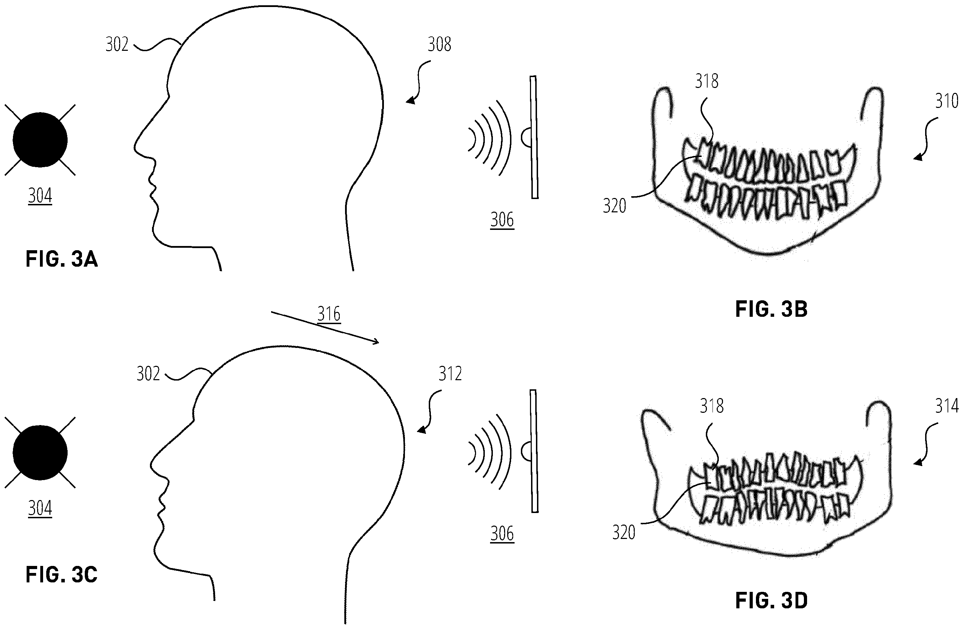

FIG. 3A - FIG. 3D illustrate the dependence of the panoramic tomographic images to the patient's position or pose. FIG. 3A shows a first position 308 of a head 302 of a patient with respect to an X-ray source 304 and its corresponding detector 306. The first position 308 may be considered an optimal position. When the head 302 is scanned from the first position 308, a panoramic image is generated which shows a first view 310 of the oral cavity. The first view 310 may be considered a canonical view of a panoramic tomographic image. As can be seen, several anatomical features such as tooth 320 and tooth root 318 are visible in the panoramic image.

In some cases, it may happen that the head 302 is not optimally positioned. For example, FIG. 3C shows a case where the head 302 is tilted backwards, in direction 316, with respect to the X-ray source 304 and detector 306 arrangement. In such a case, a patient pose related distortion will be introduced in a resulting panoramic image. This can be seen in the associated panoramic tomographic image shown in FIG. 3D, which has a second view 314. As can be seen, unlike the first view 318, the second view 314 does not display the tooth row with a slightly upward curved curve (when looking from front to back teeth), rather it appears somewhat resembling a frown. Such pose related distortion can make it difficult to compare different tomographic images.

Accordingly, the present teachings also disclose a way to adjust the second view 314 such that it becomes identical or similar to the first view 310. This is achieved by computing, using the anatomy data, at least some of the plurality of adjusted reconstruction parameters, whereby the adjusted reconstruction parameters are computed for aligning one or more of the initial panoramic tomographic images and/or the two-dimensional panoramic tomographic image with respect to a reference template. This adjustment is preferably advantageously performed via a second reconstruction data-driven logic as herein disclosed.

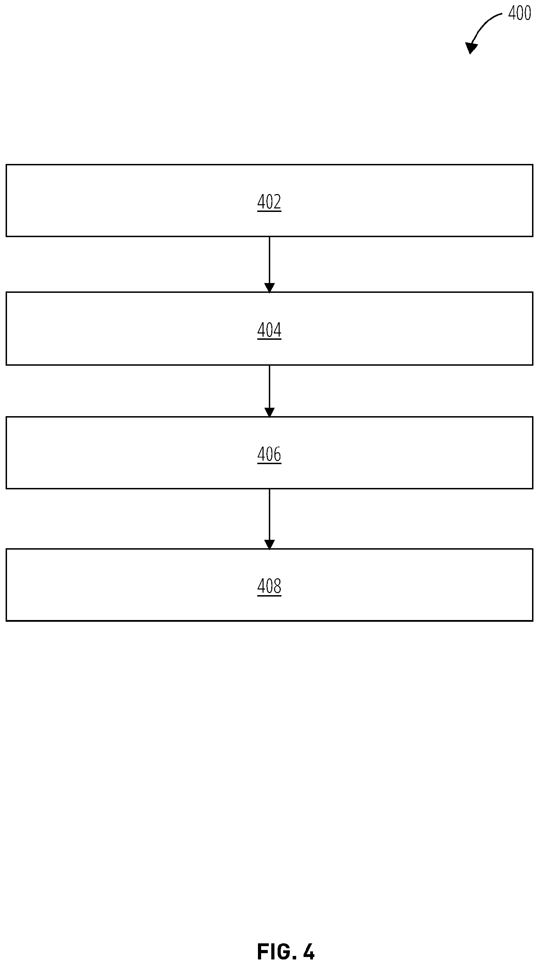

FIG. 4 shows another flowchart 400 exemplifying another aspect of the present teachings. The flowchart 400 can be implemented as a routine executable by one or more computing units, for example, operatively connected to a tomography apparatus, for example, a CBCT system for dental applications. The flowchart 400 and flowchart 100 may be executed by the same computing units or different ones.

In block 402, it is provided one or more initial panoramic tomographic images. The initial panoramic tomographic images may be provided via one or more interfaces, which may be a connectivity interface and/or a network interface. The initial panoramic tomographic images may even be provided directly via a tomography system to any one or more of the computing units. Each of the initial panoramic tomographic images is reconstructed from a plurality of projectional images that have been captured via a tomographic scan. The tomographic scan may have been performed via the tomography system. Each of the initial panoramic tomographic images is reconstructed using an initial set of reconstruction parameters for that respective image, which may be identical or non-identical to those for the other initial panoramic tomographic images. As it shall be appreciated, in some cases, there may be just one initial panoramic tomographic image.

In block 404, it is detected, via an anatomy data-driven logic, one or more pre-selected anatomical features in at least one of the initial panoramic tomographic images to provide anatomy data.

In block 406, it is computed, using the anatomy data and one or more initial panoramic tomographic images, a plurality of adjusted reconstruction parameters. The adjusted reconstruction parameters are computed for aligning projection of the two-dimensional panoramic tomographic image with respect to a reference template. The computation is preferably advantageously performed via a second reconstruction data-driven logic as herein disclosed. Further advantageously, any two of the anatomy data-driven logic, the first reconstruction data-driven logic, and the second reconstruction data-driven logic are included in a combined logic.

In block 408, a two-dimensional panoramic tomographic image is reconstructed using the adjusted reconstruction parameters. The two-dimensional panoramic tomographic image thus provides a canonical view. When combined with the flowchart 100, the present teachings can advantageously simultaneously provide the two-dimensional panoramic tomographic image with anatomical features in the sharp layer as well as in canonical view.

The method steps may be performed in the order as shown listed in the examples or aspects. It should be noted, however, that under specific circumstances a different order may also be possible. Further, it is also possible to perform one or more of the method steps once or repeatedly. These steps may be repeated at regular or irregular time periods. Further, it is possible to perform two or more of the method steps simultaneously or in a timely overlapping fashion, specifically when some or more of the method steps are performed repeatedly. The method may comprise further steps which are not listed.

The word "comprising" does not exclude other elements or steps, and the indefinite article "a" or "an" does not exclude a plurality. A single processing means, processor or controller or other similar unit may fulfill the functions of several items recited in the claims. The mere fact that certain measures are recited in mutually different dependent claims does not indicate that a combination of these measures cannot be used to advantage. Any different signs in the claim should not be construed as limiting the scope.

Further, it should be noted that in the present disclosure, the terms "at least one", "one or more" or similar expressions indicating that a feature or element may be present once or more than once typically may have been used only once when introducing the respective feature or element. Thus, in some cases unless specifically stated otherwise, when referring to the respective feature or element, the expressions "at least one" or "one or more" may not have been repeated, notwithstanding the fact that the respective feature or element may be present once or more than once.

Further, the terms "preferably", "more preferably", "particularly", "more particularly", "specifically", "more specifically" or similar terms are used in conjunction with optional features, without restricting alternative possibilities. Thus, any features introduced by these terms are optional features and are not intended to restrict the scope of the claims in any way. The present teachings may, as those skilled in the art will recognize, be performed by using alternative features. Similarly, the features introduced by "according to an aspect" or similar expressions are intended to be optional features, without any restriction regarding alternatives to the present teachings, without any restrictions regarding the scope of the present teachings and without any restriction regarding the possibility of combining the features introduced in such way with other optional or non-optional features of the present teachings.

Unless otherwise defined, all technical and scientific terms used herein have the same meaning as commonly understood by one of ordinary skill in the art to which the present teachings belong.

Various examples have been disclosed above for a method, a system, a device, a use, software program, and a computing unit comprising the computer program code for carrying out the methods herein disclosed. For example, it has been disclosed a method for reconstructing a two-dimensional panoramic tomographic image comprising: providing one or more initial panoramic tomographic images; detecting, via an anatomy data-driven logic, one or more pre-selected anatomical features to provide anatomy data; computing, using the anatomy data and one or more initial panoramic tomographic images, a plurality of adjusted reconstruction parameters; reconstructing, using the adjusted reconstruction parameters, the two-dimensional panoramic tomographic image. The present teachings also relate to a system for reconstructing a two-dimensional panoramic tomographic image, and a use of adjusted reconstruction parameters, data, and a storage medium. Those skilled in the art will understand however that changes and modifications may be made to those examples without departing from the spirit and scope of the accompanying claims and their equivalence. It will further be appreciated that aspects from the method and product embodiments discussed herein may be freely combined.

Any headings utilized within the description are for convenience only and have no legal or limiting effect.

Summarizing and without excluding further possible embodiments, certain example embodiments of the present teachings are summarized in the following clauses:
Clause 1. A computer-implemented method for reconstructing a two-dimensional panoramic tomographic image, which method comprises:
   - providing one or more initial panoramic tomographic images; each of the initial panoramic tomographic images being reconstructed from a plurality of projectional images that have been captured via a tomographic scan; wherein each of the initial panoramic tomographic images is reconstructed using respective an initial set of reconstruction parameters,
   - detecting, via an anatomy data-driven logic, one or more pre-selected anatomical features in at least one of the initial panoramic tomographic images to provide anatomy data,
   - computing, using the anatomy data and one or more initial panoramic tomographic images, a plurality of adjusted reconstruction parameters, whereby the adjusted reconstruction parameters are computed for providing appropriate focus depths which provide a sharper depiction of the pre-selected anatomical features,
   - reconstructing, using the adjusted reconstruction parameters, the two-dimensional panoramic tomographic image.
Clause 2. The method of clause 1, wherein the anatomy data-driven logic performs segmentation operation for detecting the one or more pre-selected anatomical features.
Clause 3. The method of clause 1 or clause 2, wherein the anatomy data-driven logic performs localization operation for detecting the one or more pre-selected anatomical features.
Clause 4. The method of any of the above clauses, wherein at least one of the pre-selected anatomical features are specified via a user input.
Clause 5. The method of any of the above clauses, wherein the computation of the plurality of adjusted reconstruction parameters is performed via a first reconstruction data-driven logic.
Clause 6. The method of clause 5, wherein the first reconstruction data-driven logic is pretrained in a supervised manner using first reconstruction training data comprising historical tomographic images provided with annotation data including associated reconstruction parameters.
Clause 7. The method of any of the above clauses, wherein the anatomy data-driven logic is pretrained in a supervised manner using anatomy training data comprising historical initial panoramic tomographic images and/or historical panoramic tomographic images with annotation data specifying respective anatomical features.
Clause 8. The method of any of the above clauses, further comprising:
   - computing, using the anatomy data, at least some of the plurality of adjusted reconstruction parameters, whereby the adjusted reconstruction parameters are computed also for aligning one or more of the initial panoramic tomographic images and/or the two-dimensional panoramic tomographic image with respect to a reference template.
Clause 9. The method of clause 8, wherein the computation of the at least some of the plurality of adjusted reconstruction parameters is performed via a second reconstruction data-driven logic.
Clause 10. The method of clause 9, wherein the second reconstruction data-driven logic is pretrained in a supervised manner using second reconstruction training data comprising historical anatomy data provided with annotation data including associated reconstruction parameters.
Clause 11. The method of clause 9 or clause 10, wherein any two or more of the data-driven logics; the anatomy data-driven logic, the first reconstruction data-driven logic, and the second reconstruction data-driven logic are parts of a combined logic.
Clause 12. The method of clause 11, wherein the combined logic is pretrained in a supervised manner using combined training data comprising historical initial tomographic images and/or historical panoramic tomographic images with annotation data specifying associated reconstruction parameters and optionally respective anatomical features.
Clause 13. A computer-implemented method for reconstructing a two-dimensional panoramic tomographic image, which method comprises:
   - providing one or more initial panoramic tomographic images; each of the initial panoramic tomographic image being reconstructed from a plurality of projectional images that have been captured via a tomographic scan; wherein each of the initial panoramic tomographic images is reconstructed using respective an initial set of reconstruction parameters,
   - detecting, via an anatomy data-driven logic, one or more pre-selected anatomical features in at least one of the initial panoramic tomographic images to provide anatomy data,
   - computing, using the anatomy data and one or more initial panoramic tomographic image, a plurality of adjusted reconstruction parameters, whereby the adjusted reconstruction parameters are computed for aligning projection of the two-dimensional panoramic tomographic image with respect to a reference template,
   - reconstructing, using the adjusted reconstruction parameters, the two-dimensional panoramic tomographic image.
Clause 14. The method of any of the above clauses, wherein the computed adjusted reconstruction parameters are adjustment values applied to the initial set of reconstruction parameters.
Clause 15. A computer-implemented method for reconstructing a two-dimensional panoramic tomographic image wherein the method comprises:
   - providing a plurality of projectional images that have been captured via a tomographic scan;
   - reconstructing, using the adjusted reconstruction parameters, the two-dimensional panoramic tomographic image, and/or using the adjusted reconstruction parameters for training a data-driven logic.
Clause 16. A system comprising means for performing the steps of any of the above method clauses.
Clause 17. A computer software product, or a non-transitory computer-readable storage medium storing the program, comprising instructions which when executed by a suitable one or more computing units cause any of the computing units to perform the steps of any of the above method clauses.
Clause 18. A data storage medium storing the reconstruction parameters as generated in any of the above method clauses.
Clause 19. Use of the adjusted reconstruction parameters as generated in any of the above method clauses for training a data-driven logic and/or constructing a two-dimensional panoramic tomographic image.

## Claims

1. A computer-implemented method for reconstructing a two-dimensional panoramic tomographic image, which method comprises:
- providing one or more initial panoramic tomographic images; each of the initial panoramic tomographic images being reconstructed from a plurality of projectional images that have been captured via a tomographic scan; wherein each of the initial panoramic tomographic images is reconstructed using respective an initial set of reconstruction parameters,
- detecting, via an anatomy data-driven logic, one or more pre-selected anatomical features in at least one of the initial panoramic tomographic images to provide anatomy data,
- computing, using the anatomy data and one or more initial panoramic tomographic images, a plurality of adjusted reconstruction parameters, whereby the adjusted reconstruction parameters are computed for providing appropriate focus depths which provide a sharper depiction of the pre-selected anatomical features,
- reconstructing, using the adjusted reconstruction parameters, the two-dimensional panoramic tomographic image.

2. The method of claim 1, wherein the anatomy data-driven logic performs segmentation operation for detecting the one or more pre-selected anatomical features.

3. The method of claim 1 or claim 2, wherein the anatomy data-driven logic performs localization operation for detecting the one or more pre-selected anatomical features.

4. The method of any of the above claims, wherein at least one of the pre-selected anatomical features are specified via a user input.

5. The method of any of the above claims, wherein the computation of the plurality of adjusted reconstruction parameters is performed via a first reconstruction data-driven logic.

6. The method of claim 5, wherein the first reconstruction data-driven logic is pretrained in a supervised manner using first reconstruction training data comprising historical tomographic images provided with annotation data including associated reconstruction parameters.

7. The method of any of the above claims, wherein the anatomy data-driven logic is pretrained in a supervised manner using anatomy training data comprising historical initial panoramic tomographic images and/or historical panoramic tomographic images with annotation data specifying respective anatomical features.

8. The method of any of the above claims, further comprising:
- computing, using the anatomy data, at least some of the plurality of adjusted reconstruction parameters, whereby the adjusted reconstruction parameters are computed also for aligning one or more of the initial panoramic tomographic images and/or the two-dimensional panoramic tomographic image with respect to a reference template.

9. The method of claim 8, wherein the computation of the at least some of the plurality of adjusted reconstruction parameters is performed via a second reconstruction data-driven logic.

10. The method of claim 9, wherein the second reconstruction data-driven logic is pretrained in a supervised manner using second reconstruction training data comprising historical anatomy data provided with annotation data including associated reconstruction parameters.

11. The method of claim 9 or claim 10, wherein any two or more of the data-driven logics; the anatomy data-driven logic, the first reconstruction data-driven logic, and the second reconstruction data-driven logic are parts of a combined logic.

12. A computer-implemented method for reconstructing a two-dimensional panoramic tomographic image, which method comprises:
- providing one or more initial panoramic tomographic images; each of the initial panoramic tomographic image being reconstructed from a plurality of projectional images that have been captured via a tomographic scan; wherein each of the initial panoramic tomographic images is reconstructed using respective an initial set of reconstruction parameters,
- detecting, via an anatomy data-driven logic, one or more pre-selected anatomical features in at least one of the initial panoramic tomographic images to provide anatomy data,
- computing, using the anatomy data and one or more initial panoramic tomographic image, a plurality of adjusted reconstruction parameters, whereby the adjusted reconstruction parameters are computed for aligning projection of the two-dimensional panoramic tomographic image with respect to a reference template,
- reconstructing, using the adjusted reconstruction parameters, the two-dimensional panoramic tomographic image.

13. A system comprising means for performing the steps of any of the above method claims.

14. A computer software product, or a non-transitory computer-readable storage medium storing the program, comprising instructions which when executed by a suitable one or more computing units cause any of the computing units to perform the steps of any of the above method claims.

15. A data storage medium storing the reconstruction parameters as generated in any of the above method claims.

16. Use of the adjusted reconstruction parameters as generated in any of the above method claims for training a data-driven logic and/or constructing a two-dimensional panoramic tomographic image.
